# EUROPEAN PATENT SPECIFICATION

(11) **EP 0 782 636 B1**
(45) Date of publication and mention of the grant of the patent: **06.05.1999**
(21) Application number: 95927945.6
(22) Date of filing: 30.08.1995
(51) Int. Cl.: C25C 3/08

(54) **ALUMINIUM ELECTROWINNING CELL WITH IMPROVED CARBON CATHODE BLOCKS**
ALUMINIUM-ELEKTROGEWINNUNGSZELLE MIT VERBESSERTEN KOHLENSTOFF-KATHODEBLÖCKEN
CELLULE D'EXTRACTION ELECTROLYTIQUE D'ALUMINIUM COMPORTANT DES BLOCS CATHODIQUES AMELIORES EN CARBONE

(30) Priority: 08.09.1994 US 302178
(43) Date of publication of application: 09.07.1997
(60) Divisional application: 98117608.4
(73) Proprietor: MOLTECH Invent S.A., 2320 Luxembourg (LU)
(72) Inventor: DE NORA, Vittorio, Nassau (BS)
(74) Representative: Cronin, Brian Harold John
(86) International application number: PCT/IB95/00721
(87) International publication number: WO 96/07773

(56) References cited:
- EP-A- 0 393 816
- EP-A- 0 517 100
- WO-A-92/03597
- WO-A-93/20026

## Description

### Field of the Invention

The present invention concerns a cell for the electrowinning of aluminium by the electrolysis of alumina dissolved in a fluoride-based molten electrolyte such as cryolite, incorporating improved carbon cathode blocks.

### Background of the Invention

The technology for the production of aluminium by the electrolysis of alumina, dissolved in molten cryolite containing salts, at temperatures around 950°C is more than one hundred years old.

This process, conceived almost simultaneously by Hall and Heroult, has not evolved as much as other electrochemical processes, despite the tremendous growth in the total production of aluminium that in fifty years has increased almost one hundred fold. The process and the cell design have not undergone any great change or improvement and carbonaceous materials are still used as electrodes and cell linings.

The electrolytic cell trough is typically made of a steel shell provided with an insulating lining of refractory material covered by prebaked anthracite-graphite or all graphite carbon blocks at the wall and at the cell floor bottom which acts as cathode and to which the negative pole of a direct curlas of steel conductor bars embedded in the carbon blocks.

The anodes are still made of carbonaceous material and must be replaced every few weeks. The operating temperature is still approximately 950°C in order to have a sufficiently high rate of dissolution of alumina which decreases at lower temperatures and to have a higher conductivity of the electrolyte.

The carbonaceous materials used in Hall-Heroult cells as cell lining deteriorate under the existing adverse operating conditions and limit the cell life.

The anodes have a very short life because during electrolysis the oxygen which should evolve on the anode surface combines with the carbon to form CO₂ and small amounts of CO. The actual consumption of the anode is approximately 450 kg/ton of aluminium produced which is more than 1/3 higher than the theoretical amount.

The carbon lining of the cathode bottom has a useful life of a few years after which the operation of the entire cell must be stopped and the cell relined at great cost. Despite an aluminium pool having a thickness of 15 to 20 cm maintained over the cathode, the deterioration of the cathode carbon blocks cannot be avoided because of penetration of sodium into the carbon which by chemical reaction and intercalation causes swelling, deformation and disintegration of the cathode carbon blocks, as well as penetration of cryolite and liquid aluminium.

The carbon blocks of the cell side wall do not resist oxidation and attack by cryolite and a layer of solidified cryolite has to be maintained on the cell side walls to protect them. In addition, when cells are rebuilt, there are problems of disposal of the carbon cathodes which contain toxic compounds including cyanides.

Another major drawback, however, is due to the fact that irregular electromagnetic forces create waves in the molten aluminium pool and the anode-cathode distance (ACD), also called interelectrode gap (IEG), must be kept at a safe minimum value of approximately 50 mm to avoid short circuiting between the aluminium cathode and the anode or reoxidation of the metal by contact with the CO₂ gas formed at the anode surface.

The high electrical resistivity of the electrolyte, which is about 0.4 ohm. cm., causes a voltage drop which alone represents more than 40% of the total voltage drop with a resulting energy efficiency which reaches only 25% in the most modern cells. The high cost of energy together with the low efficiency, has become an even bigger item in the total manufacturing cost of aluminium since the oil crisis, and has decreased the rate of growth of this important metal.

In the second largest electrochemical industry following aluminium, namely the caustic and chlorine industry, the invention of the dimensionally stable anodes (DSA®) based on noble metal activated titanium metal, which were developed around 1970, permitted a revolutionary progress in the chlorine cell technology resulting in a substantial increase in cell energy efficiency, in cell life and in chlorine-caustic purity. The substitution of graphite anodes with DSA® increased drastically the life of the anodes and reduced substantially the cost of operating the cells. Rapid growth of the chlorine caustic industry was retarded only by ecological concerns.

In the case of aluminium production, pollution is not due to the aluminium produced, but to the materials and the manufacturing processes used and to the cell design and operation.

However, progress has been reported in the operation of modern aluminium plants which utilize cells where the gases emanating from the cells are in large part collected and adequately scrubbed and where the emission of highly polluting gases during the manufacture of the carbon anodes and cathodes is carefully controlled.

While progress has been reported in the fabrication of carbon cathodes by the application of coatings or layers using new aluminium wettable materials which are also a barrier to sodium penetration during electrolysis, no progress has been achieved in design of cathodes for aluminium production cells with a view to restraining movement of the molten aluminium in order to reduce the interelectrode gap and the rate of wear of its surface.

U.S. Patent 4,560,488 (Sane et al) discloses a recent development in molten salt electrolysis cells concerning making materials wettable by molten aluminium. However, the carbon or graphite anodes and cathodes are of conventional design with no suggestion leading to the present invention.

U.S. Patent 4,681,671 (Duruz) illustrates another improvement in molten salt electrolysis wherein operation at lower than usual temperatures is carried out utilizing permanent anodes, e.g. metal, alloy, ceramic or a metal-ceramic composite as disclosed in European Patent Application No. 0030834 and U.S. Patent 4,397,729. Again, while improved operation is achieved at lower temperatures, there is no suggestion of the subject matter of the present invention.

PCT Application WO 89/06289 (La Camera et al) deals with an improved molten electrolysis wherein attention is directed to an electrode having increased surface area. However, again, there is no disclosure leading one to the present invention.

U.S. Patents 3,400,061 (Lewis et al) and 4,602,990 (Boxall et al) disclose aluminium electrowinning cells with sloped drained cathodes arranged with the cathodes and facing anode surfaces sloping across the cell. In these cells, the molten aluminium flows down the sloping cathodes into a median longitudinal groove along the centre of the cell, or into lateral longitudinal grooves along the cell sides, for collecting the molten aluminium and delivering it to a sump.

U.S. Patent 5,203,971 (de Nora et al) discloses an aluminium electrowinning cell having a partly refractory and partly carbon based cell lining. The carbon-based part of the cell bottom may be recessed in respect to the refractory part, which assists in reducing movement of the aluminium pool.

US Patent 3,856,650 (Kugler) proposed lining a carbon cell bottom with a ceramic coating upon which parallel rows of tiles are placed, in the molten aluminium, in a grating-like arrangement in an attempt to reduce wear due to movements of the aluminium pool.

To restrict movement in a "deep" cathodic pool of molten aluminium, US Patent No 4,824,531 (Duruz et al) proposed filling the cell bottom with a packed bed of loose pieces of refractory material. Such a design has many potential advantages but, because of the risk of forming a sludge by detachment of particles from the packed bed, the design has not found acceptance. US Patent No 4,443,313 (Dewing et al) sought to avoid this disadvantage of the previously mentioned loose packed bed by providing a monolayer of closely packed small ceramic shapes such as balls, tubes or honeycomb tiles.

The following references disclose several other improvements in cell operation.
European Patent Application No. 0308015 (de Nora) discloses a novel current collector;
European Patent Application No. 0308013 (de Nora) deals with a novel composite cell bottom; and
European Patent Application No. 0132031 (Dewing) provides a novel cell lining.

W0-A-92/03597 (Juric et al) discloses an aluminium smelting cell having a shaped cathode structure adapted to cause preferential shaping of a corresponding carbon anode, to encourage shortening of the release path of bubbles under the anodes. The cathode bottom provides a series of parallel channels by means of which aluminium can be withdrawn.

EP-A-393816 (Stedman) also discloses an aluminium smelting cell having a shaped cathode structure adapted to cause preferential shaping of a corresponding carbon anodes, to encourage shortening of the release path of bubbles

While the foregoing references indicate continued efforts to improve the operation of molten cell electrolysis operations, none suggest the invention and all proposals for means to restrain movement of the aluminium pool or layer on the cell bottom have proven to be ineffective.

### Summary of the Invention

This invention aims to overcome problems inherent in the conventional design of cells used in the electrowinning of aluminium via electrolysis of alumina dissolved in molten fluoride-based melts in particular cryolite, notably by proposing an improved cell bottom which incorporates means for restraining the aluminium pool on the cell bottom, without any need for added pieces which have to be placed or secured on the cell bottom.

The present invention permits more efficient cell operation by modifying the design of the cathode blocks on the cell bottom. Such a modified design may then be utilized in any conventional cell and even in drained cell configurations.

The invention concerns an electrolytic cell for the electrowinning of aluminium from alumina dissolved in a fluoride-containing molten electrolyte, having a cathode cell bottom made of a series of carbon cathode blocks each having a top surface, side surfaces and a bottom surface, the cathode blocks being connected side-by-side transversally of the cell for example with ramming paste as in conventional cells or, preferably, by glue. Each cathode block is provided with a centrally-located steel or other conductive bar for the delivery of current. These conductive bars are generally parallel to one another and extend transversally of the cell. A series of anodes are suspended facing a pool or a layer of molten aluminium atop the top surfaces of the cathode blocks, and the cell bottom has means for restraining movement of the pool or layer of molten aluminium.

In the improved cell bottom according to the invention, the means for restraining movement of the pool or layer of molten aluminium comprise a series of parallel channels or grooves in the top surfaces of the carbon blocks along the direction of said conductive bars transverse to the cell. In use, these channels or grooves are covered by, and restrain, the pool or the layer of molten aluminium, in particular against movement in a direction transverse to the channels or grooves, so as to greatly decrease movement of the aluminium pool or so as to facilitate the collection/evacuation of aluminium, which substantially improves cell operation and extends cell life.

The channels or grooves are formed between adjacent blocks by bevels, cut-outs or inclines along the top edges of the carbon blocks which form the channels or grooves when the adjacent blocks are fitted together. The channels or grooves in the bevelled, cut-out or inclined edges are arranged about the centrally-located conductive bar to equalize current distribution in the carbon blocks.

The surfaces of the carbon blocks making up the cathode cell bottom are most preferably coated with a layer of aluminium-wettable refractory material, advantageously a particulate refractory hard metal boride applied from a slurry containing colloid, for example as disclosed in WO 93/25731 (Sekhar et al).

The surfaces of the carbon blocks making up the cathode cell bottom may be covered by a layer of molten aluminium forming a drained cathode surface, the channels or grooves forming a canal serving to guide the flow of aluminium across the cell. In this drained configuration, the channels or grooves are partly filled with molten aluminium and the electrolysis takes place between the aluminium-wetted cathode and the facing anode surface. In this drained cathode configuration, as explained below, an arrangement will be provided for removing aluminium from the sides of the cell.

Alternatively, the surfaces of the carbon blocks making up the cathode cell bottom are covered by a pool of molten aluminium, the channels or grooves serving to reduce motion of the aluminium making up this pool. In this case, the aluminium pool completely covers the carbon blocks so that the electrolysis takes place between the surface of the aluminium pool and the facing anode surface. Due to the shape and size of the channels and their arrangement which segments the pool into sections, the magnetohydrodynamic forces are decreased significantly and movement of aluminium in the pool is significantly reduced. The depth of the aluminium pool can thus be reduced because of the resulting reduction in turbulence. Moreover, reduction of the turbulence in the aluminium pool is important because this is the origin for the formation of aluminium particles in the electrolyte, which particles are oxidized by CO₂ with the formation of alumina.

In either case, for the drained configuration or when there is a pool of aluminium, the inter-electrode distance is reduced with a concomitant reduction of cell voltage and an increase in energy efficiency.

In all cases, for drained configurations and when there is a pool of aluminium, the channels are so configured and arranged, in particular as regards their depth and the shape and angle of their walls, that the molten aluminium contained in the channels is restrained from movement in the longitudinal direction of the cell. For a drained cell configuration, the aluminium can flow along the channel into a collection channel; for a pool configuration, the walls of the channel oppose motion of the aluminium, restraining the pool and reducing turbulence.

An advantage obtained with the channeled cell bottom is that its life is extended in comparison with other electrolytic aluminium production cells. Moreover, the channeled cathode improves the uniformity of the current distribution and increases the current efficiency. Additionally, in particular for deep pool configurations, sludge can accumulate in the grooves or channels without disturbing the current distribution. In drained configurations, the grooves or channels can serve to eliminate sludge which collects in the grooves or channels but is flushed out with the molten aluminium.

At least some of the transverse channels or grooves can be formed by bevels or cut-outs along the top edges of the carbon blocks. In particular, a channel can be defined between two beveled edges of adjacent blocks.

In most embodiments, the width of the transverse channels or grooves is at least as great as their depth. These channels or grooves have a rectangular, trapezoidal, V-shaped, curved (i.e. concave at least in their bottom part; most convex sections would not restrain the molten aluminium) or an asymmetric cross-section designed to permit the evacuation and collection of aluminium when the cell operates in a drained cell configuration, or designed to act as a barrier to aluminium movement to reduce or eliminate turbulent aluminium pool movement in a pool configuration.

Advantageously, there may be at least one cross channel or groove which extends along the cell and intersects with the parallel transverse channels or grooves. Such cross channels or grooves may serve to drain the aluminium down the inclined cathode surfaces, hence guiding the flow of molten aluminium down these surfaces into the main channels or grooves. In drained cell configurations, cross channels or grooves of suitable dimensions can also serve for the removal of the molten aluminium to an aluminium reservoir.

When the surface of the carbon cathode cell bottom is sloping, cross channels or grooves may run down the sloping cathode bottom surface to facilitate drainage of the aluminium in a drained configuration. For example, the carbon cathode cell bottom comprises at least two sloping parts there being at the intersection of the two sloping parts a collecting channel leading to an aluminium reservoir for collection of the drained aluminium.

In general, for a drained cathode cell the tranverse channels or grooves may lead into at least one channel arranged longitudinally of the cell for collecting the molten aluminium, and preferably having means such as a weir for maintaining a constant level of aluminium in the transversally-extending channels or groove. This aluminium collection channel may extend along one or both sides of the cell, or could be a deep central channel machined in the cathode blocks.

Preferably, the surfaces of the carbon blocks making up the cathode cell bottom are treated to reduce sodium penetration, for example as described in WO 94/20650 or in WO 94/24337, or are coated with a layer which reduces sodium penetration, for example a refractory hard metal boride applied from a slurry containing colloid as disclosed in WO 93/25731 (all in the name of Sekhar et al).

In general, the carbon cathode blocks are made resistant to chemical attack and to mechanical attack. The surfaces of the carbon blocks making up the channeled cathode cell bottom can also be coated with a layer which prior to use or in use becomes harder than the carbon cathode block and thereby protects the surface against abrasive wear by limited movement of the molten aluminium. Moreover, the hardened cathode surface remains dimensionally stable whereas a facing carbon anode may erode and conform to the shape of the cathode. This surface-hardening effect can be achieved with the aforementioned refractory boride or other aluminium wettable refractory layers which provide an essentially dimensionally stable surface.

In this way, the cathode cell bottom can remain dimensionally stable during electrolysis, and because of this, it is both possible and advantageous to provide channels in the tops of the carbon cathode blocks because these channeled blocks will remain dimensionally stable during cell operation.

The cell incorporating the channeled cell bottom can employ conventional carbon anodes which wear in the normal way for the pool configuration but whose shape adapts to the channeled cathode, in the drained configuration. Specially-shaped carbon anodes designed to cooperate with the channeled cathode design, and in particular to facilitate gas release at the anode while assisting drainage of molten aluminium at the cathode can also be used. Dimensionally stable anodes can also be employed.

One method of fabricating an electrolytic cell according to the invention comprises providing the channels in the carbon cathode blocks before or after assembling the blocks to form the channeled cathode cell bottom. The channels are possibly machined in the carbon cathode blocks, for example using a milling cutter. For some shapes, especially with bevels, it may, however, be convenient to provide the channels by extrusion. If the blocks include bevels or cut-outs along their edges, when the adjacent blocks are brought together, the bevels or cut-outs between the assembled adjacent blocks form channels.

Machining operations such as milling/cutting in particular are simple to execute to provide a series of parallel channels or grooves of any desired shape in the carbon blocks.

When the blocks are assembled side-by-side, gaps can be left between the adjacent blocks, which gaps are filled with an anthracite-based or other usual ramming paste. Preferably, however, the blocks will be assembled using a glue, as is known for bonding together carbon cathode blocks with no or only a very small gap, such as a resin-based glue, or an inorganic glue as disclosed in WO 94/20651 (Sekhar). Either way, the assembled blocks form a continuous carbon cell bottom in the same manner as in conventional cells, apart from the fact that the surface of the cell bottom is channeled.

Before or after assembly, the carbon blocks may be treated to make them resistant to chemical and mechanical attack. Before start up of the cell for producing aluminium, the channeled cell bottom is preferably treated to harden the surface of the cathode blocks and render the surface wettable by molten aluminium, whereby in use the carbon cathode blocks remain dimensionally stable and are wetted by molten aluminium.

The invention also relates to a carbon cathode block of an electrolytic cell for the electrowinning of aluminium from alumina dissolved in a fluoride-based molten electrolyte, ready to be installed in a cell. Such carbon block has a top surface, side surfaces and a bottom surface having therealong a longitudinally extending and centrally-located groove or like recess generally parallel to the block's top and side surfaces, for receiving a steel or other conductive bar for the delivery of current.

According to the invention, the top surface of the cathode block is provided with at least one channel or groove; or at least one edge of the top surface of the cathode block is provided with at least one bevel or cut-out, or at least a part of the top surface is inclined, so that when two cathode blocks are placed side-by-side a channel or groove is formed between them. This channel, groove, bevel, cut-out or inclined part extends along the top surface of the cathode block generally parallel to the groove or like recess in the bottom surface of the cathode block, so that when the cathode block with its current conducting bar is installed in a cell, the channels or grooves in the cathode block's top surfaces are arranged transversaly of the cell.

This channel or groove in the top surface of the block, or formed between two blocks, is so shaped and dimensioned that when the cathode blocks are used to electrowin aluminium, molten aluminium collected in the Channel or groove is restrained from moving transversally to the channel or groove, providing substantial advantages in operation, as explained above.

These carbon blocks, which can incorporate all of the features described in relation to the complete cell, may have a flat top surface, or its top surface may be sloping or may comprise two roof-like inclined sections such that the blocks can be assembled side-by-side to form a cell bottom with alternately sloping sections which, at their lower intersections, form the aforesaid channels in the blocks' top surfaces.

### Description of the Drawings

Reference is now made to the drawings wherein:
- Figure 1 schematically shows part of a cell bottom formed of three cathode blocks provided with parallel channels in accordance with the invention, this schematic view being in longitudinal cross-section and side elevation of the cell;
- Figure 2 is a schematic sectional view though part of an electrolytic cell according to the invention, incorporating channeled cathode blocks and carbon anodes;
- Figure 3 is a similar view of another electrolytic cell, incorporating channeled cathode blocks and dimensionally stable anodes;
- Figure 4 is a view similar to Figure 3 of another electrolytic cell according to the invention;
- Figure 5 is a view similar to Figure 3 of another electrolytic cell according to the invention; and
- Figure 6 is a schematic plan view of the cell bottom of Figure 5 during operation, partly cut-away and with the anodes and cell superstructure not visible.

### Detailed Description of the Invention

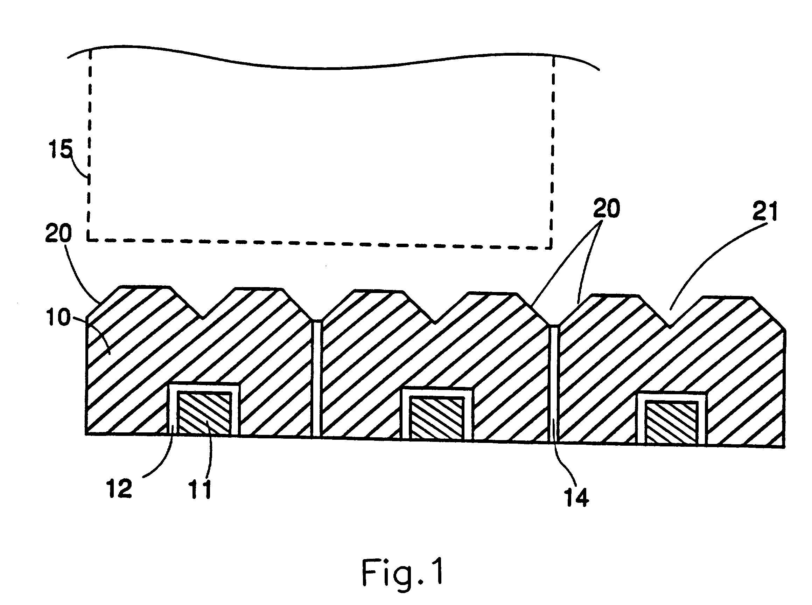

Figure 1 schematically shows part of a cell bottom formed of an assembly of channeled cathode blocks 10 according to the invention, three such blocks being shown. The blocks 10 are generally rectangular and made of carbon in the form of anthracite or graphite of the normal grade used for aluminium production cathodes. In their lower face, the blocks 10 have a recess 12 receiving a steel conductor bar 11 which is connected in the blocks by an electrically conductive bonding material for example cast iron. These steel conductor bars 11 extend externally to a negative bus bar of the cell.

The rectangular cathode blocks 10 have a top surface (which will form the cathode cell bottom) side surfaces (which will be joined together) and a bottom surface in which the recess 12 is provided in the form of a rectangular groove whose faces are parallel to the block's top and side surfaces. Usually, the recess 12 extends all the way along the blocks' bottom surface.

The side edges 20 of the block's top surfaces are beveled and, in the middle of the blocks' upper surfaces, generally V-shaped grooves 21 are machined. When two blocks 10 are brought together, the adjacent beveled edges 20 form also a V-shaped groove or channel similar in shape and size, and parallel to, the grooves 21.

The adjacent blocks 10 are joined side-by-side by ramming paste 14, for example an anthracite-based paste, to form a continuous carbon cell bottom. Usually one block 10 extends over substantially the entire width of the cell. If this is not so, several blocks 10 are arranged end-to-end across the cell, i.e. along the direction of the conductor bars 11, and may also be joined by ramming paste. Instead of using ramming paste, the blocks can advantageously be bonded by a resin-based glue, in which case the gap between the adjacent blocks would be much smaller.

When the blocks 10 are joined side-by-side to form a cell bottom, the conductive bars 11 extend across the cell and protrude from both sides of the cell (or alternate conductor bars protrude from opposite sides) for connection to the current supply.

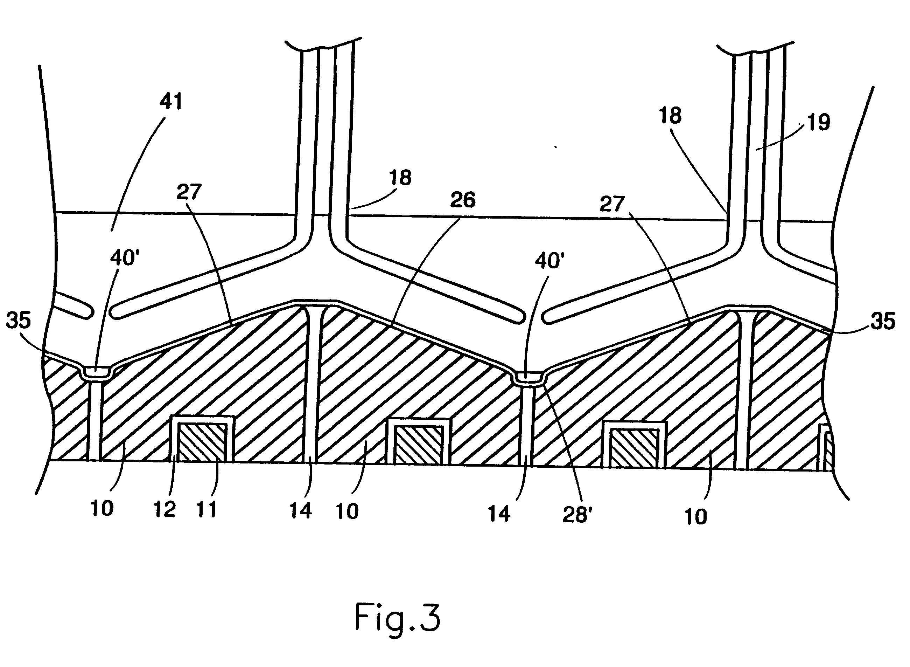

An anode 15, seen in side view, is diagramatically indicated in a dashed line. In use, the cell bottom formed by the blocks 10 with the V-shaped grooves or channels 20,21 is covered by a shallow pool of molten aluminium 40 (see Figure 3), or just the grooves or channels 20, 21 are partly filled with molten aluminium, as will be described in detail later.

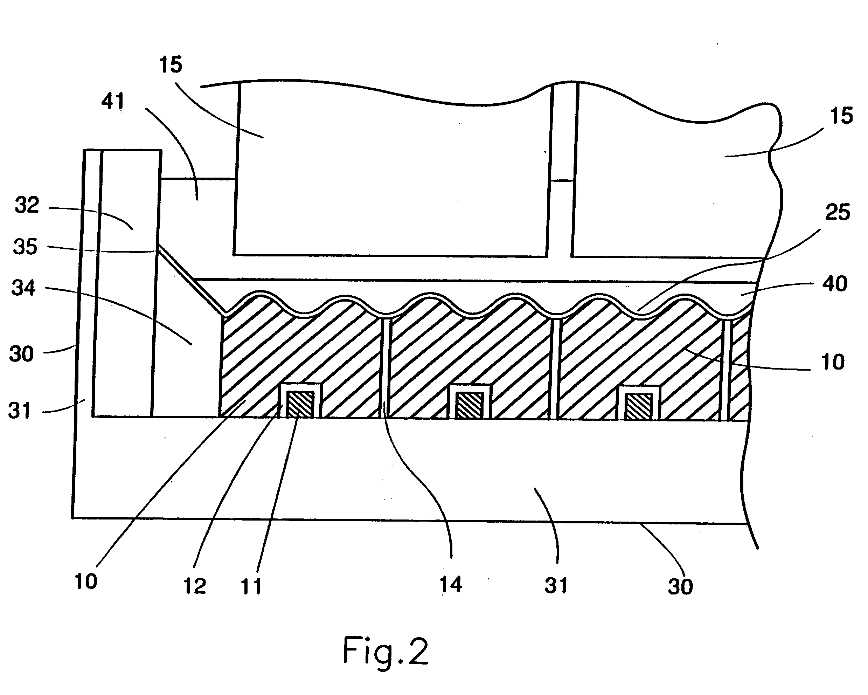

Figure 2 schematically shows, in longitudinal cross-section and side elevation, an aluminium production cell incorporating a carbon cell bottom formed of channeled carbon blocks 10 similar to those described above. The diagramatically-shown cell structure comprises a steel shell 30 of known type containing refractory material 31 over its bottom and extending up its sides. The blocks 10, supported on this refractory material 31, are arranged side-by-side and extend across the cell. The carbon blocks 10 are connected together by ramming paste 14, or alternatively are glued together, and the endmost blocks 10 are connected by ramming paste 34 to an insert 32 of carbon or a refractory carbide such as silicon carbide at the cell end. As previously, the bottoms of blocks 10 have recesses 12 receiving steel conductor bars 11 connected in the blocks by cast iron, which conductor bars 11 extend externally to a negative bus bar of the cell, situated along the side of the cell.

The top surfaces of the blocks 10 have a series of parallel channels in the form of a wavy profile 25, though this could be any one of the other shapes shown in Figure 1, or other channeled shapes extending across the cell. This channeled profile 25 forms the top surface of the carbon cell bottom which is advantageously covered with a coating 35 of aluminium-wettable refractory material on which, as shown, there is a pool 40 of molten aluminium below a fluoride-based molten electrolyte 41 such as molten cryolite containing dissolved alumina.

Several anodes 15, conventionally blocks of prebaked carbon, are suspended in the cell by the usual mechanisms (not shown) enabling their height to be adjusted. Oxygen evolving non-carbon anodes may be suspended in the cell instead of the carbon anodes 15 but do not need to be vertically adjustable because they are non-consumable. The anodes 15 dip in the molten electrolyte 41 facing the channeled cathode surface 25. The anode-cathode gap is not shown to scale. In operation, the cryolite-based electrolyte 41 is usually at a temperature of about 950°C, but the invention applies also to components used in cells with electrolytes well below 900°C, and as low as 700°C.

The surface of the channeled profile 25 of the carbon cathode blocks 10 can be made dimensionally stable by applying a coating 35 of an aluminium-wettable refractory hard metal (RHM) having little or no solubility in aluminium and having good resistance to attack by molten cryolite. Note that the- coating 35 also covers the ramming paste 14 and 34. Useful RHM include borides of titanium, zirconium, tantalum, chromium, nickel, cobalt, iron, niobium and/or vanadium. Useful cathode materials are carbonaceous materials such as anthracite or graphite.

It is preferred that the channeled profile 25 of the cathode of the present invention have a coating 35 of particulate refractory hard metal boride in a colloid applied from a slurry of the particulate refractory hard metal boride in a colloid carrier, wherein the colloid comprises at least one of colloidal alumina, silica, yttria, ceria, thoria, zirconia, magnesia, lithia, monoaluminium phosphate or cerium acetate. The colloidal carrier has been found to considerably improve the properties of the coating produced by non-reactive sintering.

WO 93/25731 (Sekhar et al) provides a method of applying refractory hard metal boride to a carbon containing component of a cell for the production of aluminium, in particular by the electrolysis of alumina dissolved in a cryolite-based molten electrolyte, this method comprising applying to the surface of the component a slurry of particulate preformed refractory boride in a colloidal carrier as specified above, followed by drying, and by heat treatment before or after the component is installed in the aluminium production cell.

The method of application of the slurry to the channeled cathodes of the present invention involves painting (by brush or roller), dipping, spraying, or pouring the slurry onto the channeled cathode and allowing to dry before another layer is added. The coating 35 does not need to be entirely dry before the application of the next layer. It is preferred to heat the coating 35 with a suitable source so as to completely dry it and improve densification of the coating. Heating and drying take place preferably in non-oxidizing atmospheres at about 80-200°C, usually for half an hour to several hours and further heat treatments are possible.

The channeled profile 25 of the cathode may be treated by sand blasting or pickled with acids or fluxes such as cryolite or other combinations of fluorides and chlorides prior to the application of the coating. Similarly the channeled cathode surface may be cleaned with an organic solvent such as acetone to remove oily products and other debris prior to the application of the coating. These treatments will enhance the bonding of the coatings to the channeled carbon cathode.

After coating the channeled cathode by dipping, painting or spraying the slurry or combinations of such techniques in single or multi-layer coatings and drying, a final coat of the colloid alone may be applied lightly prior to use.

Before or after application of the coating 35 and before use, the channeled cathode can be painted, sprayed, dipped or infiltrated with reagents and precursors, gels and/or colloids. For instance, before applying the slurry of particulate refractory boride in the colloidal carrier the channeled cathode can be impregnated with e.g. a compound of lithium to improve the resistance to penetration by sodium, as described in WO 94/20650 (Sekhar et al).

To assist rapid wetting of the channeled cathode by molten aluminium, the refractory coating 35 on the channeled cathode may be exposed to molten aluminium in the presence of a flux assisting penetration of aluminium into the refractory material, the flux for example comprising a fluoride, a chloride or a borate, of at least one of lithium and sodium, or mixtures thereof. Such treatment favors aluminization of the refractory coating by the penetration therein of aluminium.

In operation of the cell illustrated in Figure 2, as shown, the coating 35 on the channeled profile 25 of the carbon blocks 10 making up the cathode cell bottom is covered by a pool of molten aluminium 40. The channels in the surface serve to restrain motion of the aluminium making up the pool 40 mainly in the iongitudinal direction of the cell. As illustrated, the aluminium pool 40 completely covers the carbon blocks 10 so that the electrolysis takes place between the surface of the aluminium pool 40 and the facing surface of anode 15. An advantage is that the depth of the aluminium pool 40 can be reduced because of the reduction in turbulence. Moreover, sludge can accumulate in the channels of the channeled surface 25 without disturbing the current distribution.

It should be noted that the motion restraining effect of the wavy profile 25 is due mainly to the concave lower part and to the lower part of the inclined wails which has a sufficient angle and height to obstruct movement of the molten aluminium in the direction along the cell.

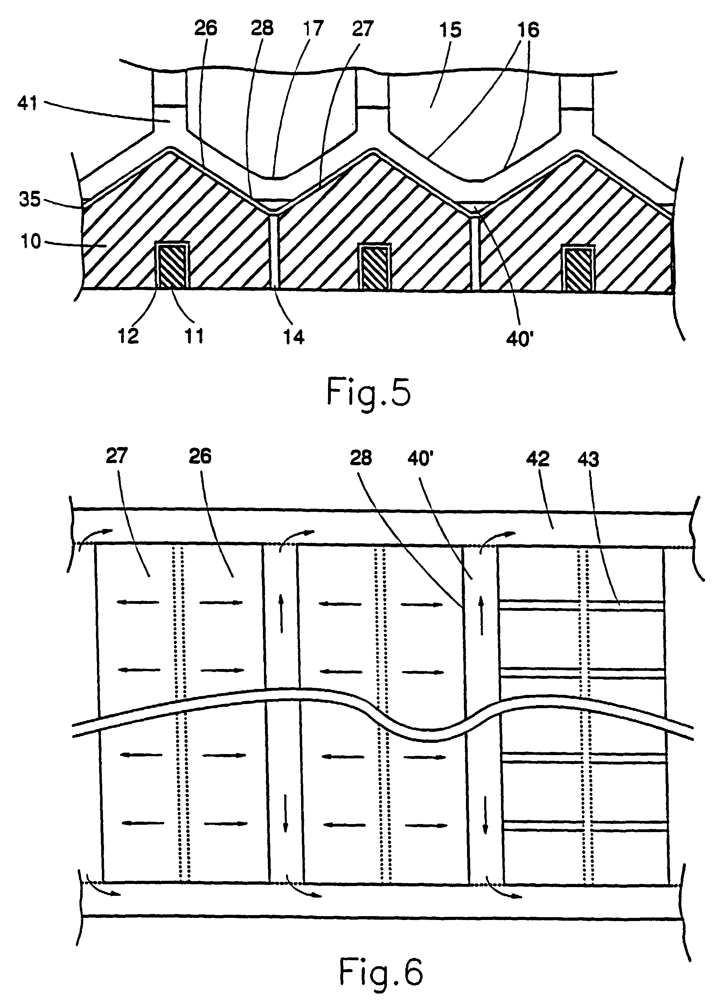

Alternatively, the channeled surface 25 of the carbon blocks 10 making up the cathode cell bottom, coated with a refractory aluminium-wettable coating 35, may be covered by a thin layer of molten aluminium forming a drained cathode surface, the channels serving to guide the flow of aluminium across the cell. In this drained configuration, the channels are partly filled with molten aluminium so that the electrolysis takes place between the aluminium-wetted cathode surface 25 and the facing surface of anode- 15 which will tend to wear in such a way as to conform to the surface 25. A cell with such a drained configuration will be described below in connection with Figure 6.

Figure 3 shows a cell of similar design, where the same elements are designated by the same references, which includes dimensionally stable anodes 18 in a "roof" configuration straddling the tops of the adjacent carbon cathode blocks 10 which have alternately arranged inclined surfaces 26,27 coated with an aluminium-wettable refractory coating 35.

The cell of Figure 3 has a series of recessed aluminium collection grooves 28' located at the bottom of the alternately arranged surfaces 26,27 and extending therealong, as claimed in claims 12 and 29, except that the blocks 10 of this Figure 3 are different to those claimed.

The anodes 18 are made of or coated with any suitable non-consumable or substantially non-consumable, electronically-conductive material resistant to the electrolyte and to the anodically produced oxygen and other gases, vapors and fumes present in the cell. The anodes 18 may for example have a metal, alloy or cermet substrate which is protected in use by a cerium-oxyfluoride-based protective coating produced and/or maintained by maintaining a concentration of cerium in the electrolyte, as described in U.S. patent 4,614,569 (Duruz et al).

The cell of Figure 3 also operates as a drained cathode cell, wherein the aluminium produced on the inclined cathode surfaces 26 and 27 coated with an aluminium-wettable refractory coating 35 flows down to the bottom of these inclined surfaces where it is collected as an aluminium canal 40' in a groove 28' which is generally U-shaped in cross-section. This groove 28' is formed between cut-outs in the edges of the carbon blocks 10, when the blocks are fitted together. The cathode surfaces 26,27 are inclined in the longitudinal direction of the cell in order to permanently drain the product aluminium into the canal 40', and the aluminium is removed from this canal 40' at a rate to keep its aluminium level stable. In this drained configuration, the grooves 28' are filled with the molten aluminium forming canal 40'. Electrolysis takes place between the inclined aluminium-wetted cathode surfaces 26,27 and the facing inclined surfaces of the dimensionally-stable anodes 18. The inclination of anodes 18 assists in release of the anodically-formed gases through a central opening 19 and this can be further assisted if needed by providing ridges on the anodes 18 or making the anodes foraminate.

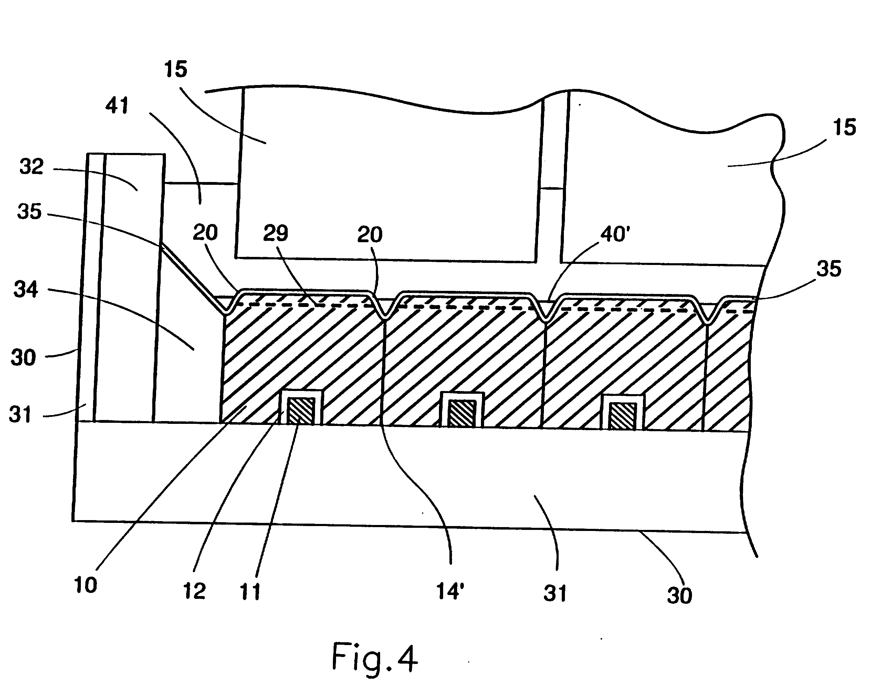

Figure 4 shows part of another cell according to the invention similar to the cell shown in Figure 2. Instead of having a wavy channeled surface, the blocks 10 have bevelled upper side edges 20 and may be bevelled also along their top end edges, as indicated in dotted lined at 29. The bevelled side edges 20 of the adjacent blocks form V or U-shaped channels running along the blocks 10, there being a similar V or U-shaped channel formed between the bevelled edge of the endmost block 10 and the adjacent mass of ramming paste 34. The main channels formed by the bevels 20 extend parallel to the conductor bars 11, i.e. across the cell, and the cross-channels formed by bevels 29 extend along the cell.

These channels formed by the beveled edges 20 have the advantage of equalizing the current distribution in the carbon blocks 10 from the centrally located current distribution bar in the block's lower surface. This may in particular make it possible to reduce the height of the carbon blocks 10, leading to a saving in carbon which reduces the amount of toxic carbon that has to be disposed of when the carbon potlining is reconstructed.

In Figure 4, the adjacent blocks 10 are shown as being bonded together by a glue 14', so there is essentially no gap between them. As shown, the aluminium-wettable refractory coating 35 covers the entire upper surfaces of blocks 10 with bevels 20, 29 and the glued joints 14', and also extends over the adjacent mass of ramming paste 34.

The purpose of the cross-bevels 29 in the top end edges of the blocks 10 is to form a cross-channel perpendicular to the parallel channels formed by the V or U-shaped grooves between bevels 20, for draining off the product aluminium to maintain the canals 40' of aluminium in the V or U-shaped grooves at a constant level. Such cross-channels can be formed in one or both ends of the blocks and, if required, one or more intermediate cross channels can be formed by machining grooves across the blocks 10, intersecting with the V or U-shaped grooves formed by bevels 20.

These cross-channels, which extend along the cell, are connected to a reservoir of molten aluminium, possibly with a weir in order to set the level of the aluminium canals 40'. Operation is possible with a fluctuating level of the aluminium canals 40' or with a steady level.

The cell shown partly in Figures 5 and 6 comprises a cell bottom made up of a series of carbon blocks 10 joined by ramming paste 14, where V-shaped channels 28 are formed by juxtaposing blocks 10 which, in this example, have roof-like inclined surfaces 26,27 side-by-side with the corresponding surfaces 27,26 of the adjacent blocks. The V-shaped channels 28 receive a stream or canal 40' of molten aluminium in their bottom part, running across the cell. Above the V-shaped channels 28 and aluminium canals 40' are carbon anodes 15 with corresponding V-shaped active faces 15. Opposite the aluminium canal 40', the anode faces 16 have a flattened part 17 which can be formed in use.

The cell of Figures 5 and 6 operates as a drained cathode cell, wherein the aluminium produced on the inclined cathode surfaces 26 and 27 coated with the aluminium-wettable refractory coating 35 flows down these surfaces and into the channel 28 where it is collected in the aluminium canal 40'. The direction of flow of the molten aluminium is schematically indicated in Figure 6 by arrows. As shown, the channels 28 join into two side channels 42, running along and inclined in the longitudinal direction of the cell, in order to permanently drain the product aluminium. The molten aluminium is drained at a rate to keep the level of the aluminium canals 40' stable, for example by having a weir at the outflow end of the side channels 42.

As illustrated in the right hand part of Figure 6, the two longitudinally sloping surfaces 26 and 27 of each cathode block 10 can be provided with cross channels or grooves 43 which run down these sloping surfaces 26 and 27 and lead into the main channel 28 running across the cell. Any suitable number of cross grooves 43 can be provided with any suitable spacing. These cross grooves 43 guide the flow of aluminium down the sloping cathode surfaces 26,27, while restraining movement of the aluminium across the cell as it drains down these inclined cathode surfaces. Only once the drained aluminium joins the canal 40' can it flow freely across the cell to the side channels 28.

This arrangement of the cross grooves 43 down the inclined cathode surfaces 26,27, the main collecting grooves 28 across the cell, and the side channels 42 provides a perfectly controlled flow of the molten aluminium over the cell bottom, avoiding turbulence due to magnetohydrodynamic forces.

The side channels 42 can be formed in the ends of the cathode blocks 10, or can be made in the cell sidewalls, or can be a combination of bevels or cut-outs in the ends of the cathode blocks 10, cooperating with bevels or ledges in the cell sidewalls. Additionally or alternatively, a central channel could be provided by machining recesses in the centre parts of the inclined walls 26, 27 of the cathode blocks 10, or by making each cathode section from two cathode blocks placed end-to-end, with cut-outs in the facing ends.

## Claims

1. An electrolytic cell for the electrowinning of aluminium from alumina dissolved in a fluoride-based molten electrolyte, having a cathode cell bottom made of a series of carbon cathode blocks (10) each having a top surface, side surfaces and a bottom surface, the cathode blocks being connected side-by-side transverse to the cell and each being provided with a centrally-located steel or other conductive bar (11) for the delivery of current, said conductive bars (11) being generally parallel to one another and transverse to the cell; and a series of anodes (15) facing a pool or a layer (40,40') of molten aluminium atop the top surfaces of the cathode blocks, the cell bottom having a series of parallel channels or grooves (20,25) in the top surfaces of the carbon blocks (10) along the direction of said conductive bars (11) transverse to the cell, said channels or grooves being covered in use by and restraining movement of the pool or layer (40,40') of molten aluminium, characterized in that the channels or grooves are formed between adjacent blocks (10) by bevels (20), cut-outs or inclines along the top edges of the carbon blocks which form said channels or grooves when the adjacent blocks (10) are fitted together, the channels or grooves (20,25) in the beveled, cut-out or inclined edges being arranged about the centrally-located conductive bar (11) to equalize current distribution in the carbon blocks (10).

2. The electrolytic cell of claim 1, wherein the surfaces of the carbon blocks (10) making up the cathode cell bottom are coated with a layer (35) of aluminium-wettable refractory material.

3. The electrolytic cell of claim 2, wherein the surfaces of the carbon blocks (10) making up the cathode cell bottom are covered by a layer of molten aluminium forming a drained cathode surface, the channels or grooves (20) forming a canal serving to guide the flow of aluminium (40') across the cell.

4. The electrolytic cell of claim 1 or 2, wherein the surfaces of the carbon blocks (10) making up the cathode cell bottom are covered by a pool (40) of molten aluminium, the channels or grooves (20,25) serving to reduce motion of the aluminium making up this pool.

5. The electrolytic cell of any preceding claim, wherein the top surfaces of the carbon blocks (10) further comprise at least one cross channel or groove (29) which intersects with the parallel channels or grooves, said cross channel or groove (29) extending longitudinally of the cell.

6. The electrolytic cell of any preceding claim, wherein at least some of the channels or grooves are formed by bevels (20) along the top edges of the carbon blocks.

7. The electrolytic cell of any preceding claim, wherein the width of the channels or grooves is at least as great as their depth.

8. The electrolytic cell of any preceding claim, wherein the channels or grooves have a rectangular cross-section.

9. The electrolytic cell of any one of claims 1 to 7, wherein the channels or grooves have a trapezoidal cross-section.

10. The electrolytic cell of any one of claims 1 to 7, wherein the channels or grooves have a V-shaped cross-section.

11. The electrolytic cell of any one of claims 1 to 7, wherein the channels or grooves (25) have a curved or rounded cross-section.

12. The electrolytic cell of any preceding claim, wherein the channels of grooves (28,28') are located at and along the bottom of two inclined cathode surfaces (26,27) on which aluminium is produced and drained into said channels or grooves (28,28') where it is collected.

13. The electrolytic cell of claim 12, wherein the channels of grooves (28,28') are recessed and extend below the bottom of two inclined cathode surfaces (26,27).

14. The electrolytic cell of claim 5, wherein the cathode cell bottom is sloping longitudinally and wherein the cross channels or grooves run down the sloping cathode cell bottom.

15. The electrolytic cell of claim 5, wherein each cathode block (10) comprises a pair of two longitudinally sloping parts (26,27) in roof-like configuration defining at the intersection of the two sloping parts (26,27) of adjacent blocks a collecting channel (28) leading to an aluminium reservoir, and the cross channels or grooves (43) run down said sloping parts into the collecting channel(28).

16. The electrolytic cell of claim 3, or any one of claims 5 to 14 when depending on claim 3, wherein the channels (20) or grooves extending transversally of the cell lead into at least one channel (29) arranged longitudinally of the cell for collecting the molten aluminium, preferably having means for maintaining a constant level of aluminium (40') in the transversally-extending channels or grooves.

17. The electrolytic cell of any preceding claim, wherein the surfaces of the carbon blocks (10) making up the cathode cell bottom are treated to reduce sodium penetration.

18. The electrolytic cell of any preceding claim, wherein the surfaces of the carbon blocks making up the cathode cell bottom are coated with a layer (35) which reduces sodium penetration.

19. The electrolytic cell of any preceding claim, wherein the surfaces of the carbon blocks making up the cathode cell bottom are coated with a layer (35) which prior to or in use becomes harder than the carbon cathode block.

20. The electrolytic cell of any preceding claim, wherein the carbon cathode blocks (10) remain dimensionally stable during electrolysis.

21. The electrolytic cell of any preceding claim, wherein the carbon cathode blocks (10) are made resistant to chemical and mechanical attack.

22. The electrolytic cell of any preceding claim, wherein the top surfaces of the carbon blocks (10) further comprise at least one further channel or groove (21) between and parallel to the channels or grooves (20,25) formed in the beveled or cut-out edges.

23. A carbon cathode block (10) of an electrolytic cell for the electrowinning of aluminium from alumina dissolved in a fluoride-based molten electrolyte, having a top surface, side surfaces and a bottom surface, the bottom surface of the cathode block (10) having a centrally-located groove (12) or like recess extending therealong generally parallel to the top and side surfaces of the cathode block, for receiving a steel or other conductive bar (11) for the delivery of current,
characterized in that the top surface of the cathode block (10) is provided along its edges with at least one bevel (20) or cut-out, or at least a part (26-27) of the top surface is inclined, so that when two cathode blocks (10) are placed side-by-side a channel or groove is formed between them; said channel or groove formed by the bevel, cut-out or inclined part extending along the top surface of the cathode block (10) generally parallel to the groove (12) or like recess in the bottom surface of the cathode block, the channel or groove formed between two blocks being so shaped and dimensioned that when the cathode blocks (10) are used to electrowin aluminium, molten aluminium collected in the channel or groove is restrained from moving transversally to the channel or groove, the channels or grooves (20,25) in the beveled, cut-out or inclined edges being arranged about the centrally-located groove (12) to equalize current distribution in the carbon blocks (10).

24. The carbon cathode block of claim 23, wherein the width of the channels or grooves is at least as great as their depth.

25. The carbon cathode block of claim 23 or 24, wherein the channels or grooves formed when two cathode blocks (10) are placed side-by-side have a rectangular cross-section.

26. The carbon cathode block of claim 23 or 24, wherein the channels or grooves formed when two cathode blocks (10) are placed side-by-side have a trapezoidal cross-section.

27. The carbon cathode block of claim 23 or 24, wherein the channels or grooves formed when two cathode blocks (10) are placed side-by-side have a V-shaped cross-section.

28. The carbon cathode block of claim 23 or 24, wherein the channels or grooves (25) formed when two cathode blocks (10) are placed side-by-side have a curved or rounded cross-section.

29. The carbon cathode block of claim 23 or 24, wherein its top surface comprises two inclined sections (26,27) in roof-like configuration such that the blocks can be assembled side-by-side to form a cell bottom with alternately sloping sections forming therebetween the grooves or channels (28) parallel to the grooves (12) or like recesses in the blocks' bottom surfaces.

30. The carbon cathode block of any one of claims 23 to 29, wherein grooves or channels (28,28') are located at and along the bottom of two V-shaped inclined cathode surfaces (26,27) on which aluminium is produced and drained into said channels or grooves (28,28') where it is collected.

31. The carbon cathode block of claim 30, wherein the grooves or channels (28') are recessed and below the bottom of two V-shaped inclined cathode surfaces (26,27).

32. The carbon cathode block of any one of claims 23 to 31, further comprising in its top surface at least one cross channel or groove (29) which intersects with the bevel, cut-out or inclined part.

33. The carbon cathode block of any one of claims 23 to 31, wherein its top surface other than the beveled or cut-out part is flat.

34. The carbon cathode block of any one of claims 23 to 33, wherein its top surface is coated with a layer (35) of aluminium-wettable refractory material.

35. The carbon cathode block of any one of claims 23 to 34, comprising a steel or other conductive bar (11) secured in the groove (12) or like recess in the bottom surface of the block by cast iron or another electrically conductive bonding material.

36. A method of fabricating the electrolytic cell according to claim 1, comprising assembling carbon cathode blocks according to any one of claims 23 to 35 to form the channeled cathode cell bottom.

37. The method of claim 36, comprising treating the carbon cathode blocks (10) to make them resistant to chemical and mechanical attack.

38. The method of claim 36 or 37, wherein before start up of the cell for producing aluminium, the channeled cell bottom is treated to harden the surface of the cathode blocks (10) and render the surface wettable by molten aluminium, rendering the carbon blocks dimensionally stable during electrolysis.

## Patentansprüche

1. Elektrolysezelle für die elektrolytische Extraktion von Aluminium aus Aluminiumoxid, das in einem auf Fluorid basierenden, geschmolzenen Elektrolyt gelöst ist, mit einem Kathodenzellenboden, der aus einer Reihe von Kohlenstoffkathodenblöcken (10) hergestellt ist, die jeweils eine obere Fläche, seitliche Flächen und eine untere Fläche haben, wobei die Kathodenblöcke quer zu der Zelle nebeneinanderliegend verbunden und für die Zuführung von Strom jeweils mit einer mittig angeordneten Stahlschiene oder mit einer anderen konduktiven Schiene (11) versehen sind, wobei die konduktiven Schienen (11) allgemein parallel zueinander und quer zu der Zelle angeordnet sind; und mit einer Reihe von Anoden (15), die einem Sumpf oder einer Schicht (40, 40') aus geschmolzenem Aluminium über den oberen Flächen der Kathodenblöcke zugewandt sind, wobei der Zellenboden eine Reihe von parallelen Kanälen oder Mulden (20, 25) in den oberen Flächen der Kohlenstoffblöcke (10) entlang der Richtung der konduktiven Schienen (11) quer zu der Zelle aufweist, wobei die Kanäle oder Mulden bei Benutzung durch den Sumpf oder die Schicht (40, 40') aus geschmolzenem Aluminium bedeckt sind und die Bewegung davon begrenzen, dadurch gekennzeichnet, daß die Kanäle oder Mulden zwischen benachbarten Blöcken (10) durch Abschrägungen (20), Aussparungen oder Neigungen entlang der oberen Kanten der Kohlenstoffblöcke gebildet sind, durch die die Kanäle oder Mulden gebildet sind, wenn die benachbarten Blöcke (10) zusammengesetzt sind, und die Kanäle oder Mulden (20, 25) in den abgeschrägten, ausgesparten oder geneigten Kanten über der mittig angeordneten, konduktiven Schiene (11) angeordnet sind, um die Stromverteilung in den Kohlenstoffblöcken (10) zu vergleichmäßigen.

2. Elektrolysezelle nach Anspruch 1, bei der die Flächen der Kohlenstoffblöcke (10), aus denen der Kathodenzellenboden gebildet ist, durch eine Schicht (35) aus mit Aluminium benetzbarem, hitzebeständigen Material bedeckt sind.

3. Elektrolysezelle nach Anspruch 2, bei der die Flächen der Kohlenstoffblöcke (10), aus denen der Kathodenzellenboden gebildet ist, die durch eine Schicht aus geschmolzenem Aluminium bedeckt sind, eine drainierte Kathodenfläche bilden, wobei die Kanäle oder Mulden (20) einen Kanal bilden, der dazu dient, die Aluminiumströmung (40') quer zu der Zelle zu leiten.

4. Elektrolysezelle nach Anspruch 1 oder 2, bei der die Flächen der Kohlenstoffblöcke (10), aus denen der Kathodenzellenboden gebildet ist, durch einen Sumpf (40) aus geschmolzenem Aluminium bedeckt sind, wobei die Kanäle oder Mulden (20, 25) dazu dienen, die Bewegung des Aluminiums zu reduzieren, aus dem dieser Sumpf gebildet ist.

5. Elektrolysezelle nach einem der vorhergehenden Ansprüche, bei der die oberen Flächen der Kohlenstoffblöcke (10) außerdem zumindest einen Querkanal oder eine Quermulde (29) aufweisen, die sich mit den parallelen Kanälen oder Mulden schneidet, wobei sich der Querkanal oder die Quermulde (29) in Längsrichtung der Zelle erstreckt.

6. Elektrolysezelle nach einem der vorhergehenden Ansprüche, bei der zumindest einige der Kanäle oder Mulden durch Abschrägungen (20) entlang der oberen Kanten der Kohlenstoffblöcke gebildet sind.

7. Elektrolysezelle nach einem der vorhergehenden Ansprüche, bei der die Breite der Kanäle oder Mulden zumindest genauso groß ist wie deren Tiefe.

8. Elektrolysezelle nach einem der vorhergehenden Ansprüche, bei der die Kanäle oder Mulden einen rechteckigen Querschnitt haben.

9. Elektrolysezelle nach einem der Ansprüche 1 bis 7, bei der die Kanäle oder Mulden einen trapezförmigen Querschnitt haben.

10. Elektrolysezelle nach einem der Ansprüche 1 bis 7, bei der die Kanäle oder Mulden einen V-förmigen Querschnitt haben.

11. Elektrolysezelle nach einem der Ansprüche 1 bis 7, bei der die Kanäle oder Mulden (25) einen gekrümmten oder abgerundeten Querschnitt haben.

12. Elektrolysezelle nach einem der vorhergehenden Ansprüche, bei der die Kanäle oder Mulden (28, 28') an oder entlang der Unterkante von zwei geneigten Kathodenflächen (26, 27) angeordnet sind, auf denen Aluminium erzeugt und in die Kanäle oder Mulden (28, 28') abgeleitet wird, wo es gesammelt wird.

13. Elektrolysezelle nach Anspruch 12, bei der die Kanäle oder Mulden (28,28') vertieft sind und sich bis unter die Unterkante von zwei geneigten Kathodenflächen (26, 27) erstrecken.

14. Elektrolysezelle nach Anspruch 5, bei der der Kathodenzellenboden in Längsrichtung schräg abfällt und bei der die Querkanäle oder Quermulden entlang dem schräg abfallenden Kathodenzellenboden nach unten verlaufen.

15. Elektrolysezelle nach Anspruch 5, bei der jeder Kathodenblock (10) ein Paar von zwei in Längsrichtung schräg abfallenden Abschnitten (26, 27) in dachähnlicher Anordnung enthält, durch die an der Schnittstelle der beiden schräg abfallenden Abschnitten (26, 27) von benachbarten Blöcken ein Sammelkanal (28) gebildet wird, der zu einem Aluminium-behältnis führt, und die Querkanäle oder Mulden (43) an den schräg abfallenden Abschnitten nach unten in den Sammelkanal (28) laufen.

16. Elektrolysezelle nach Anspruch 3 oder nach einem der Ansprüche 5 bis 14, sofern diese von Anspruch 3 abhängig sind, bei der die Kanäle (20) oder Mulden, die sich quer zu der Zelle erstrecken, in zumindest einen Kanal (29) führen, der in Längsrichtung der Zelle angeordnet ist, um das geschmolzene Aluminium zu sammeln, vorzugsweise Einrichtungen aufweisen, um in den sich in Querrichtung erstreckenden Kanälen oder Mulden einen konstanten Aluminium-Pegel (40') beizubehalten.

17. Elektrolysezelle nach einem der vorhergehenden Ansprüche, bei der die Flächen der Kohlenstoffblöcke (10), aus denen der Kathodenzellenboden gebildet ist, behandelt sind, um das Eindringen von Natrium zu reduzieren.

18. Elektrolysezelle nach einem der vorhergehenden Ansprüche, bei der die Flächen der Kohlenstoffblöcke, aus denen der Kathodenzellenboden gebildet ist, mit einer Schicht (35) beschichtet sind, durch die das Eindringen von Natrium reduziert wird.

19. Elektrolysezelle nach einem der vorhergehenden Ansprüche, bei der die Flächen der Kohlenstoffblöcke, aus denen der Kathodenzellenboden gebildet ist, mit einer Schicht (35) beschichtet sind, die vor oder bei der Benutzung härter wird als der Kohlenstoffkathodenblock.

20. Elektrolysezelle nach einem der vorhergehenden Ansprüche, bei der die Kohlenstoffkathodenblöcke (10) während der Elektrolyse konstante Abmessungen behalten.

21. Elektrolysezelle nach einem der vorhergehenden Ansprüche, bei der die Kohlenstoffkathodenblöcke (10) gegen chemische und mechanische Beanspruchung beständig gemacht sind.

22. Elektrolysezelle nach einem der vorhergehenden Ansprüche, bei der die oberen Flächen der Kathodenblöcke (10) außerdem zumindest einen weiteren Kanal oder Mulde (21) zwischen und parallel zu den Kanälen oder Mulden (20, 25) aufweisen, die in den abgeschrägten oder ausgesparten Kanten gebildet sind.

23. Kohlenstoffkathodenblock (10) von einer Elektrolysezelle für die elektrolytische Extraktion von Aluminium aus Aluminiumoxid, das in einem auf Fluorid basierenden, geschmolzenen Elektrolyt gelöst ist, mit einer oberen Fläche, seitlichen Flächen und einer unteren Fläche, wobei die untere Fläche des Kathodenblocks (10) eine mittig angeordnete Nut (12) oder eine ähnliche Aussparung aufweist, die sich daran entlang allgemein parallel zu der oberen und zu den seitlichen Flächen des Kathodenblocks erstreckt, um eine Stahlschiene oder eine andere konduktive Schiene (11) für die Zuführung von Strom aufzunehmen,
dadurch gekennzeichnet, daß die obere Fläche des Kathodenblocks (10) entlang ihrer Kanten mit zumindest einer Abschrägung (20) oder Aussparung versehen ist oder daß zumindest ein Abschnitt (26 - 27) der oberen Fläche geneigt ist, so daß, wenn zwei Kathodenblöcke (10) nebeneinander angeordnet sind, zwischen diesen ein Kanal oder eine Mulde gebildet ist; wobei der Kanal oder die Mulde durch die Abschrägung, Aussparung oder geneigten Abschnitt gebildet ist, der sich entlang der oberen Fläche des Kathodenblocks (10) erstreckt, und zwar allgemein parallel zu der Nut (12) oder der ähnlichen Aussparung in der unteren Fläche des Kathodenblocks, wobei der Kanal oder die Mulde, die zwischen zwei Blöcken ausgebildet ist, geformt und dimensioniert ist, so daß, wenn die Kathodenblöcke (10) für die elektrolytische Extraktion von Aluminium verwendet werden, geschmolzenes Aluminium, das in dem Kanal oder der Mulde gesammelt ist, an einer Bewegung quer zu dem Kanal oder der Mulde gehindert wird, wobei die Kanäle oder Mulden (20, 25) in den abgeschrägten, ausgesparten oder geneigten Kanten über der mittig angeordneten Nut (12) angeordnet sind, um die Stromverteilung in den Kohlenstoffblöcken (10) zu vergleichmäßigen.

24. Kohlenstoffkathodenblock nach Anspruch 23, bei dem die Breite der Kanäle oder Mulden zumindest genauso groß wie deren Tiefe ist.

25. Kohlenstoffkathodenblock nach Anspruch 23 oder 24, bei dem die gebildeten Kanäle oder Mulden, wenn zwei Kathodenblöcke (10) nebeneinander angeordnet sind, einen rechteckigen Querschnitt haben.

26. Kohlenstoffkathodenblock nach Anspruch 23 oder 24, bei dem die gebildeten Kanäle oder Mulden, wenn zwei Kathodenblöcke (10) nebeneinander angeordnet sind, einen trapezförmigen Querschnitt haben.

27. Kohlenstoffkathodenblock nach Anspruch 23 oder 24, bei dem die gebildeten Kanäle oder Mulden, wenn zwei Kathodenblöcke (10) nebeneinander angeordnet sind, einen V-förmigen Querschnitt haben.

28. Kohlenstoffkathodenblock nach Anspruch 23 oder 24, bei dem die gebildeten Kanäle oder Mulden (25), wenn zwei Kathodenblöcke (10) nebeneinander angeordnet sind, einen gekrümmten oder abgerundeten Querschnitt haben.

29. Kohlenstoffkathodenblock nach Anspruch 23 oder 24, bei dem deren obere Fläche zwei geneigte Abschnitte (26, 27) in dachähnlicher Anordnung aufweist, so daß die Blöcke nebeneinanderliegend zusammengesetzt werden können, um einen Zellenboden mit abwechselnd geneigten Abschnitten zu bilden, durch welche die zwischenliegenden Mulden oder Kanäle (28) parallel zu den Nuten (12) oder ähnlichen Aussparungen in den unteren Flächen der Blöcke gebildet sind.

30. Kohlenstoffkathodenblock nach einem der Ansprüche 23 bis 29, bei dem die Mulden oder Kanälen (28, 28') an oder entlang der Unterkante von zwei V-förmigen, geneigten Kathodenflächen (26, 27) angeordnet sind, auf denen Aluminium erzeugt und in die Kanäle oder Mulden (28, 28') geleitet wird, wo es gesammelt wird.

31. Kohlenstoffkathodenblock nach Anspruch 30, bei dem die Mulden oder Kanälen (28') vertieft sind und zwar bis unter die Unterkante von zwei V-förmigen, geneigten Kathodenflächen (26, 27).

32. Kohlenstoffkathodenblock nach einem der Ansprüche 23 bis 31, der außerdem in dessen oberen Fläche zumindest einen Querkanal oder Quermulde (29) aufweist, die sich mit dem abgeschrägten, ausgesparten oder geneigten Abschnitt schneidet.

33. Kohlenstoffkathodenblock nach einem der Ansprüche 23 bis 31, bei dem dessen obere Fläche, anders als der abgeschrägte oder ausgesparte Abschnitt, flach verläuft.

34. Kohlenstoffkathodenblock nach einem der Ansprüche 23 bis 33, bei dem dessen obere Fläche mit einer Schicht (35) aus einem mit Aluminium benetzbaren Material bedeckt ist.

35. Kohlenstoffkathodenblock nach einem der Ansprüche 23 bis 34, mit einer Stahlschiene oder einer anderen konduktiven Schiene (11), die in der Nut (12) oder einer ähnlichen Aussparung in der unteren Fläche des Blocks durch Gußeisen oder eine anderes elektrisches leitfähiges Bindungsmaterial.

36. Verfahren zur Herstellung der Elektrolysezelle nach Anspruch 1, mit dem Zusammensetzen von Kohlenstoffkathodenblöcken nach einem der Ansprüche 23 bis 35, um den mit Kanälen versehenen Kathodenzellenboden zu bilden.

37. Verfahren nach Anspruch 36, mit dem Behandeln der Kohlenstoffkathodenblöcke (10), um diese gegen chemische und mechanische Belastung beständig zu machen.

38. Verfahren nach Anspruch 36 oder 37, bei dem vor dem Anlaufen der Zelle zur Herstellung von Aluminium der mit Kanälen versehene Zellenboden behandelt wird, um die Fläche der Kathodenblöcke (10) zu härten und die Fläche durch geschmolzenes Aluminium benetzbar zu machen, wobei die Kohlenstoffblöcke während der Elektrolyse konstante Abmessungen behalten.

## Revendications

1. Cellule électrolytique pour la récupération électrolytique de l'aluminium à partir d'alumine dissoute dans un électrolyte fondu à base de fluorure, possédant un fond de cellule de cathode réalisée à partir d'une série de blocs de cathode (10) possédant chacun une surface supérieure, des surfaces latérales et une surface inférieure, les blocs de cathode étant connectés côte-à-côte transversalement à la cellule et chacun étant doté d'une barre située centralement (11) D'acier ou d'un autre conducteur pour l'alimentation en courant, lesdites barres conductrices (11) étant généralement parallèles entre elles et transversales par rapport à la cellule; et une série d'anodes (15) faisant face à un bassin ou à une couche (40,40') d'aluminium fondu au dessus des surfaces supérieures des blocs de cathode, le fond de cellule possédant une série de canaux ou de sillons (20,25) parallèles dans les surfaces supérieures des blocs de carbone (10) le long de la direction desdites barres conductrices (11) transversales à la cellule, lesdits canaux ou sillons étant recouverts pendant l'utilisation par et restreignant le mouvement du bassin ou de la couche (40,40') d'aluminium fondu, caractérisé en ce que les canaux ou sillons sont formés entre des blocs (10) adjacents par des biseaux (20), des coupures ou des inclinaisons le long des bords supérieurs des blocs de carbone qui forment lesdits canaux ou sillons lorsque les blocs adjacents (10) sont assemblés, les canaux ou sillons (20,25) dans les bords biseautés, coupés ou inclinés étant arrangés autour de la barre conductrice (11) située centralement pour égaliser la distribution de courant dans les blocs de carbone (10).

2. La cellule électrolytique de la revendication 1, dans laquelle les surfaces des blocs de carbone (10) constituant le fond de cellule de cathode sont revêtues avec une couche (35) de matériau réfractaire mouillable par l'aluminium.

3. La cellule électrolytique de la revendication 2, dans laquelle les surfaces des blocs de carbone (10) constituant le fond de cellule de cathode sont couvertes par une couche d'aluminium fondu formant une surface de cathode drainée, les canaux ou sillons (20) formant un canal servant à guider le flux d'aluminium à travers la cellule.

4. La cellule électrolytique de la revendication 1 ou 2, dans laquelle les surfaces des blocs de carbone (10) constituant le fond de cellule de cathode sont recouvertes par un bassin (40) d'aluminium fondu, les canaux ou sillons (20,25) servant à réduire le mouvement de l'aluminium formant ce bassin.

5. La cellule électrolytique de n'importe quelle revendication précédente, dans laquelle les surfaces supérieures des blocs de carbone (10) comprend en plus au moins un canal ou sillon (29) croisé qui intersecte les canaux ou sillons parallèles, ledit canal ou sillon (29) croisé s'étendant longitudinalement dans la cellule.

6. La cellule électrolytique de n'importe quelle revendication précédente, dans laquelle au moins certains des canaux ou sillons sont formés par des biseaux (20) le long des bords supérieurs des blocs de carbone.

7. La cellule électrolytique de n'importe quelle revendication précédente, dans laquelle la largeur des canaux ou sillons est au moins aussi grande que leur profondeur.

8. La cellule électrolytique de n'importe quelle revendication précédente, dans laquelle les canaux ou sillons ont une section transversale rectangulaire.

9. La cellule électrolytique de n'importe laquelle des revendications 1 à 7, dans laquelle les canaux ou sillons ont une section trapézoïdale.

10. La cellule électrolytique de n'importe laquelle des revendications 1 à 7, dans laquelle les canaux ou sillons ont une section en forme de V.

11. La cellule électrolytique de n'importe laquelle des revendications 1 à 7, dans laquelle les canaux ou sillons (25) ont une section incurvée ou arrondie.

12. La cellule électrolytique de n'importe quelle revendication précédente, dans laquelle les canaux ou sillons (28,28') sont situés sur et le long du fond de deux surfaces de cathode inclinées (26,27) sur lesquelles de l'aluminium est produit et drainé dans lesdits canaux ou sillons (28,28') où il est collecté.

13. La cellule électrolytique de la revendication 12, dans laquelle les canaux ou sillons (28,28') sont enfoncés et s'étendent en-dessous du fond des deux surfaces de cathode inclinées (26,27).

14. La cellule électrolytique de la revendication 5, dans laquelle le fond de cellule de cathode est en pente longitudinalement et dans lequel les canaux ou sillons croisés descendent le fond de cellule de cathode en pente.

15. La cellule électrolytique de la revendication 5, dans laquelle chaque bloc de cathode (10) comprend une paire de deux parties en pente longitudinalement (26,27) en configuration de toit définissant à l'intersection des deux parties en pente (26,27) de blocs adjacents un canal de collecte (28) menant à un réservoir d'aluminium, et les canaux ou sillons croisés (43) descendant le long des dites parties en pente dans le canal de collecte (28).

16. La cellule électrolytique de la revendication 3, ou de n'importe laquelle des revendications 5 à 14 dépendant de la revendication 3, dans laquelle les canaux (20) ou sillons s'étendent transversalement à la cellule mènent à au moins un canal (29) arrangé longitudinalement de la cellule pour collecter l'aluminium fondu, préférablement ayant un moyen pour maintenir un niveau constant d'aluminium (40') dans les canaux ou sillons s'étendant transversalement.

17. La cellule électrolytique de n'importe quelle revendication précédente, dans laquelle les surfaces des blocs de carbone (10) formant le fond de cellule de cathode sont traitées pour réduire la pénétration de sodium.

18. La cellule électrolytique de n'importe quelle revendication précédente, dans laquelle les surfaces des blocs de carbone (10) formant le fond de cellule de cathode sont revêtues avec une couche (35) qui réduit la pénétration de sodium.

19. La cellule électrolytique de n'importe quelle revendication précédente, dans laquelle les surfaces des blocs de carbone (10) formant le fond de cellule de cathode sont revêtues avec une couche (35) qui avant ou pendant l'utilisation devient plus dur que le bloc de carbone de la cathode.

20. La cellule électrolytique de n'importe quelle revendication précédente, dans laquelle les blocs de carbone de la cathode (10) restent dimensionnellement stables pendant l'électrolyse.

21. La cellule électrolytique de n'importe quelle revendication précédente, dans laquelle les blocs de carbone de cathode (10) sont rendus résistants à l'attaque chimique et mécanique.

22. La cellule électrolytique de n'importe quelle revendication précédente, dans laquelle les surfaces supérieures des blocs de carbone de cathode (10) comprennent en plus au moins un canal ou sillon supplémentaire (21) entre et parallèle aux canaux ou sillons (20,25) formés dans les bords biseautés ou découpés.

23. Un bloc de carbone de cathode (10) d'une cellule électrolytique pour la récupération électrolytique de l'aluminium à partir d'aluminium dissoute dans un électrolyte fondu à base de cryolite, ayant une surface supérieure, des surfaces latérales et une surface inférieure, la surface inférieure du bloc de carbone de cathode (10) ayant un sillon situé centralement (12) ou un enfoncement similaire s'étendant le long du et généralement parallèlement au sommet et aux surfaces latérales du bloc de cathode, pour recevoir une barre conductrice (11) en acier ou en un autre conducteur pour l'alimentation en courant,
caractérisé en ce que la surface supérieure du bloc de cathode (10) est doté le long de ses bords d'au moins un biseau (20) ou une partie coupée, ou au moins une partie (26-27) de la surface supérieure est inclinée, de sorte que lorsque deux blocs de cathode (10) sont placés côte-à-côte un canal ou un sillon est formé entre eux; ledit canal ou sillon formé par le biseau, la partie coupée ou inclinée s'étendant le long de la surface supérieure du bloc de cathode (10) généralement parallèle au sillon (12) ou au renfoncement similaire dans la surface inférieure du bloc de cathode, le canal ou sillon formé entre les deux blocs étant formé et dimensionné de sorte que lorsque les blocs de cathode (10) sont utilisés pour récupérer électrolytiquement de l'aluminium, l'aluminium fondu récolté dans le canal ou sillon est restreint de se déplacer transversalement au canal ou sillon, les canaux ou sillons (20,25) dans les bords biseautés, coupés ou inclinés étant arrangés autour du sillon située centralement pour égaliser la distribution de courant dans les blocs de carbone (10).

24. Le bloc de carbone de cathode de la revendication 23, dans lequel la largeur des canaux ou sillons formés lorsque deux blocs de cathode sont placés côte-à-côte est au-moins aussi grande que leur profondeur.

25. Le bloc de carbone de cathode de la revendication 23 ou 24, dans lequel les canaux ou sillons formés lorsque deux blocs de cathode sont placés côte-à-côte ont une section transversale rectangulaire.

26. Le bloc de carbone de cathode de la revendication 23 ou 24, dans lequel les canaux ou sillons formés lorsque deux blocs de cathode sont placés côte-à-côte formés lorsque deux blocs de cathode sont placés côte-à-côte ont une section trapézoïdale.

27. Le bloc de carbone de cathode de la revendication 23 ou 24, dans lequel les canaux ou sillons formés lorsque deux blocs de cathode sont placés côte-à-côte ont une section en forme de V.

28. Le bloc de carbone de cathode de la revendication 23 ou 24, dans lequel les canaux ou sillons (25) formés lorsque deux blocs de cathode sont placés côte-à-côte ont une section incurvée ou arrondie.

29. Le bloc de carbone de la cathode de la revendication 23 ou 24, dans lequel la surface supérieure comprend deux sections inclinées (26,27) en configuration de toit de telle sorte que les blocs peuvent être assemblées côte-à-côte pour former un fond de cellule avec des sections alternativement en pente formant entre eux les canaux ou sillons (28) parallèles aux sillons (12) ou aux renfoncements similaires dans les surfaces inférieures des blocs.

30. Le bloc de carbone de cathode de n'importe laquelle des revendications 23 à 29, dans lequel les sillons ou canaux (28,28') sont situés sur et le long du fond de deux surfaces de cathode inclinées en forme de V (26,27) sur lesquelles l'aluminium est produit et drainé dans lesdits canaux ou sillons (28,28') où il est collecté.

31. Le bloc de carbone de cathode de la revendication 30, dans lequel les canaux ou sillons (28') sont enfoncés et s'étendent en-dessous du fond des deux surfaces de cathode inclinées en forme de V (26,27).

32. Le bloc de carbone de cathode de n'importe laquelle des revendications 23 à 31, comprenant en plus dans sa surface supérieure au-moins un canal ou sillon croisé (29) qui intersecte le biseau, la partie coupée ou inclinée.

33. Le bloc de carbone de cathode de n'importe laquelle des revendications 23 à 31, dans lequel sa surface supérieure autre que la partie biseautée ou coupée est plate.

34. Le bloc de carbone de cathode de n'importe laquelle des revendications 23 à 33, dans lequel sa surface supérieure es revêtue avec une couche (35) de matériau réfractaire mouillable par l'aluminium.

35. Le bloc de carbone de cathode de n'importe laquelle des revendications 23 à 34, comprenant une barre (11) en acier ou autre conducteur assurée dans le sillon (12) ou enfoncement semblable dans la surface inférieure du bloc par du fer de fonte ou un autre matériau liant électriquement conducteur.

36. Une méthode de fabrication d'une cellule électrolytique selon la revendication 1, comprenant l'assemblage des blocs de carbone de cathode selon n'importe laquelle des revendications 23 à 35 pour former le fond de cellule de la cathode cannelé.

37. La méthode de la revendication 36 ou 37, comprenant le traitement des blocs de carbone de cathode (10) pour les rendre résistants à l'attaque chimique et mécanique.

38. La méthode de la revendication 36 ou 37, dans laquelle, avant le démarrage de la cellule pour la production d'aluminium, le fond de cellule cannelé est traité pour durcir la surface des blocs de la cathode (10) et rendre la surface mouillable par l'aluminium fondu, rendant les blocs en carbone dimensionnellement stables pendant l'électrolyse.
